# EUROPEAN PATENT APPLICATION

(11) **EP 4 597 805 A1**
(43) Date of publication of application: **06.08.2025**
(21) Application number: 25154531.5
(22) Date of filing: 28.01.2025
(51) Int. Cl.: H02K 9/19, H02K 5/20

(54) **MOTOR HOUSING**

(30) Priority: 05.02.2024 JP 2024015955
(71) Applicant: TOYOTA JIDOSHA KABUSHIKI KAISHA, Aichi-ken, 471-8571 (JP)
(72) Inventor: YAMATO, Fumiaki, Toyota-shi, 471-8571 (JP); YOSHIKAWA, Makoto, Toyota-shi, 471-8571 (JP); ONO, Ryo, Toyota-shi, 471-8571 (JP); UKAJI, Hajime, Toyota-shi, 471-8571 (JP); YAMAGUCHI, Daiki, Toyota-shi, 471-8571 (JP); URANO, Hiroaki, Toyota-shi, 471-8571 (JP); TAKAO, Ren, Toyota-shi, 471-8571 (JP)
(74) Representative: D Young & Co LLP

(57) **Abstract**

A motor housing (12) includes: a water supply channel (80) supplied with water-based refrigerant; a water drain channel (82) at a position different from the water supply channel (80) in a circumferential direction with reference to a central axis and draining the water-based refrigerant; a first-range water channel (50; 81; 83; 84; 110) in a first range (R1) from the water supply channel (80) toward one side in the circumferential direction to the water drain channel (82); an oil supply channel (86) supplied with oil-based refrigerant; a first oil drain channel (54) at a position different from the oil supply channel (86; 286) in the circumferential direction and draining the oil-based refrigerant to an internal space of the motor housing (12); and a second-range oil channel (52; 88; 90; 92; 112) in a second range (R2; R12) from the oil supply channel (86; 286) toward the other side in the circumferential direction to the first oil drain channel (54). The first range (R1) at least partially coincides with the second range (R2; R12) in position in the circumferential direction.

## Description

### BACKGROUND OF THE INVENTION

### 1. Field of the Invention

The disclosure relates to a motor housing.

### 2. Description of Related Art

Japanese Unexamined Patent Application Publication No. 2006-187105 (JP 2006-187105 A) describes a motor housing having a cylindrical shape and extending along a central axis. The motor housing includes a water supply channel, a water drain channel, a water channel, an oil supply channel, an oil drain channel, and an oil channel. The water supply channel is supplied with water-based refrigerant. The water drain channel is provided at a position different from the water supply channel in a circumferential direction with reference to the central axis and drains water-based refrigerant. The water channel is provided in a first range in the circumferential direction. The oil supply channel is supplied with oil-based refrigerant. The oil drain channel is provided at a position different from the oil supply channel in the circumferential direction. The oil channel is provided in a second range in the circumferential direction.

### SUMMARY OF THE INVENTION

In the motor housing described in JP 2006-187105 A, the first range in which the water channel is provided and the second range in which the oil channel is provided are provided at different positions from each other in the circumferential direction. Therefore, if there is a temperature difference between water-based refrigerant flowing through the water channel and oil-based refrigerant flowing through the oil channel, a motor can be cooled or warmed unevenly.

The specification provides a technology capable of effectively cooling or warming a motor by a combination of water-based refrigerant and oil-based refrigerant.

A first aspect of the technology provides a motor housing having a cylindrical shape and extending along a central axis. The motor housing may include: a water supply channel configured to be supplied with water-based refrigerant; a water drain channel provided at a position different from the water supply channel in a circumferential direction with reference to the central axis and configured to drain the water-based refrigerant; a first-range water channel provided in a first range from the water supply channel toward one side in the circumferential direction to the water drain channel; an oil supply channel configured to be supplied with oil-based refrigerant; a first oil drain channel provided at a position different from the oil supply channel in the circumferential direction and configured to drain the oil-based refrigerant to an internal space of the motor housing; and a second-range oil channel provided in a second range from the oil supply channel toward the other side in the circumferential direction to the first oil drain channel. At least part of the first range may coincide with at least part of the second range in a position in the circumferential direction.

With the above configuration, at least part of the first range coincides with at least part of the second range in position in the circumferential direction. For this reason, heat is exchanged between water-based refrigerant flowing through the water channel and oil-based refrigerant flowing through the oil channel. Through this heat exchange, a temperature difference between the water-based refrigerant and the oil-based refrigerant is moderated, and uneven cooling or warming of a motor is suppressed. Furthermore, since oil-based refrigerant is supplied to the internal space of the motor housing, the motor is directly cooled (or warmed) by the oil-based refrigerant. Therefore, it is possible to effectively cool or warm the motor by a combination of water-based refrigerant and oil-based refrigerant.

According to a second aspect, in the first aspect, the first-range water channel may include a plurality of axial water channels extending in an axial direction parallel to the central axis, and the second-range oil channel may include a plurality of axial oil channels extending in the axial direction. At least part of the axial water channel may coincide with at least part of the axial oil channel in a position in a radial direction with reference to the central axis.

With the above configuration, a distance between each of the axial water channels and an adjacent one of the axial oil channels can be reduced. Therefore, it is possible to effectively exchange heat between the axial water channels and the axial oil channels.

According to a third aspect, in the first or second aspect, the first-range water channel may include a plurality of axial water channels extending in an axial direction parallel to the central axis, and the second-range oil channel may include a plurality of axial oil channels extending in the axial direction. The plurality of axial water channels and the plurality of axial oil channels may be alternately arranged at least one by one in the circumferential direction.

With the above configuration, at least one axial oil channel is disposed adjacent to each of many axial water channels, so it is possible to effectively exchange heat between the axial water channels and the axial oil channels.

According to a fourth aspect, in any one of the first to third aspects, the first-range water channel may include a plurality of axial water channels extending in an axial direction parallel to the central axis, and the second-range oil channel may include a plurality of axial oil channels extending in the axial direction. An inner-side end of the axial water channel may be disposed inward of an inner-side end of the axial oil channel in a radial direction.

With the above configuration, it is possible to effectively cool a motor accommodated in the internal space with water-based refrigerant flowing through the axial water channels. Such a configuration is particularly effective in a structure in which the temperature of water-based refrigerant is more accurately managed than the temperature of oil-based refrigerant.

According to a fifth aspect, in any one of the first to fourth aspects, the first oil drain channel may be disposed adjacent to the water supply channel.

If the temperature of the motor is higher than the temperature of water-based refrigerant, the temperature of water-based refrigerant flowing through the water channel increases as the water-based refrigerant flows from an upstream side toward a downstream side. In other words, the temperature of water-based refrigerant flowing through the water supply channel is lowest. With the above configuration, it is possible to cool oil-based refrigerant flowing through the first oil drain channel by heat exchange with water-based refrigerant flowing through the water supply channel.

According to a sixth aspect, in the fifth aspect, the first-range water channel may include a plurality of axial water channels extending in an axial direction parallel to the central axis, and the second-range oil channel may include a plurality of axial oil channels extending in the axial direction. The plurality of axial water channels may include a first axial water channel connected to the water supply channel, and the plurality of axial oil channels may include a first axial oil channel connected to the first oil drain channel. The first axial oil channel may be adjacent to the first axial water channel.

As described above, when the temperature of the motor is higher than the temperature of water-based refrigerant, the temperature of water-based refrigerant flowing through the first axial water channel is lowest of water-based refrigerant flowing through the plurality of axial water channels. With the above configuration, it is possible to cool oil-based refrigerant flowing through the first axial oil channel by heat exchange with water-based refrigerant flowing through the first axial water channel.

According to a seventh aspect, in the sixth aspect, the plurality of axial water channels may further include a second axial water channel connected to the water drain channel. The first axial oil channel may be located in a range from the first axial water channel toward the other side in the circumferential direction to the second axial water channel.

With the above configuration, it is possible to freely design the first oil drain channel extending from the first axial oil channel to the inside of the motor housing. In other words, there is no water channel in the range from the first axial water channel toward the other side in the circumferential direction to the second axial water channel. Therefore, when the first axial oil channel is located in that range, it is possible to freely design the first oil drain channel without interference with the water channel.

According to an eighth aspect, in any one of the first to seventh aspects, the motor housing may hold a stator. An inner periphery of the motor housing may have a contact region being in contact with an outer periphery of the stator, and an opposing region located on one side of the contact region in an axial direction parallel to the central axis and opposed to the stator via a gap. The first oil drain channel may have at least one opening in the opposing region of the inner periphery of the motor housing.

With the above configuration, it is possible to directly cool the stator with oil-based refrigerant drained from the at least one opening of the first oil drain channel. In addition, oil-based refrigerant supplied to the stator can also function as a lubricant for a gear unit and bearings.

According to a ninth aspect, in the eighth aspect, the at least one opening of the first oil drain channel may include an opening located vertically above the central axis.

With the above configuration, it is possible to reliably bring oil-based refrigerant drained from the at least one opening of the first oil drain channel into contact with the stator. Therefore, it is possible to further efficiently cool the stator.

According to a tenth aspect, in the eighth or ninth aspect, the at least one opening of the first oil drain channel may include a plurality of openings arranged in the circumferential direction.

With the above configuration, it is possible to increase locations where oil-based refrigerant contacts in the stator. Therefore, it is possible to further efficiently cool the stator.

According to an eleventh aspect, in any one of the eighth to tenth aspects, the motor housing may further include a guide portion configured to guide the oil-based refrigerant drained from the at least one opening of the first oil drain channel toward a coil end of the stator.

The coil end of the stator tends to generate heat. With the above configuration, oil-based refrigerant drained from the at least one opening is guided toward the coil end. Therefore, it is possible to directly cool the coil end.

According to a twelfth aspect, in any one of the eighth to eleventh aspects, the motor housing may further include a second oil drain channel configured to drain the oil-based refrigerant from the second-range oil channel to the internal space of the motor housing. The inner periphery of the motor housing may have a second opposing region located on the other side of the contact region in the axial direction and opposed to the stator via a gap. The second oil drain channel may have at least one second opening in the second opposing region of the inner periphery of the motor housing.

With the above configuration, it is possible to directly cool the stator with oil-based refrigerant drained from the at least one second opening of the second oil drain channel at the other side in the axial direction. Therefore, it is possible to further efficiently cool the stator.

According to a thirteenth aspect, in any one of the first to twelfth aspects, the motor housing may further include a center housing extending in an axial direction parallel to the central axis, a first cover connected to one end of the center housing in the axial direction, and a second cover connected to the other end of the center housing in the axial direction.

With the above configuration, it is possible to easily form water channels and oil channels. In other words, when parts of water channels and oil channels are formed in the center housing, the first cover, and the second cover in advance, and the center housing, the first cover, and the second cover are combined with one another, it is possible to implement water channels and oil channels with a relatively complicated configuration.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic sectional view of a drive system;
FIG. 2 is a sectional view of a motor housing;
FIG. 3 is an enlarged view of a center oil drain channel;
FIG. 4 is a view of a first cover when viewed from the other side in an axial direction;
FIG. 5 is a view of a second cover when viewed from one side in the axial direction;
FIG. 6 is a sectional view of the motor housing and is a view that shows a range in which water-based refrigerant flows and a range in which oil-based refrigerant flows;
FIG. 7 is a sectional view of a motor housing according to a second embodiment;
FIG. 8 is a view of a first cover according to the second embodiment when viewed from the other side in an axial direction;
FIG. 9 is a view of a second cover according to the second embodiment when viewed from one side in the axial direction; and
FIG. 10 is a sectional view of the motor housing according to the second embodiment and is a view that shows a range in which water-based refrigerant flows and a range in which oil-based refrigerant flows.

### DETAILED DESCRIPTION OF EMBODIMENTS

### First Embodiment

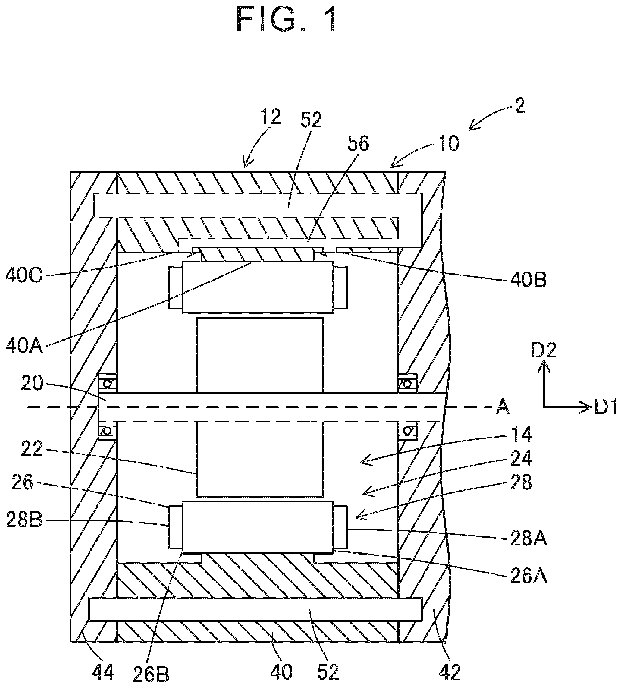

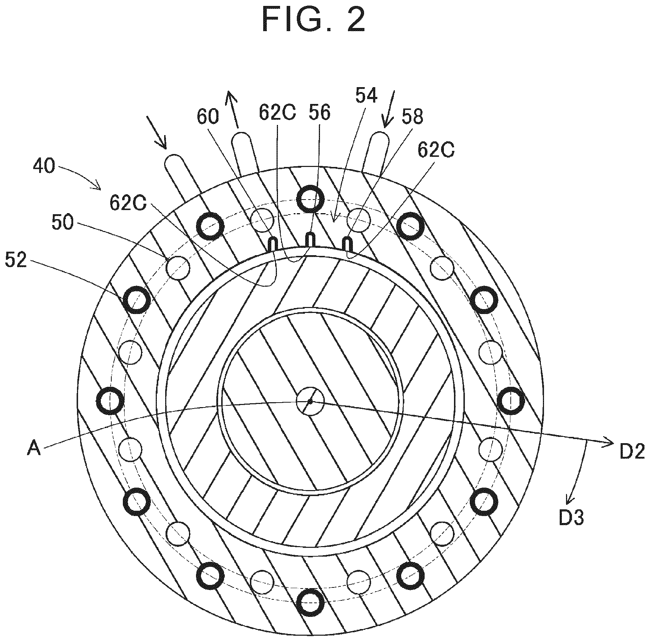

A drive system 2 will be described with reference to FIG. 1 to FIG. 6. The drive system 2 is mounted on an electrified vehicle or the like. In the specification, a cylindrical coordinate system composed of an axial direction D1, a radial direction D2, and a circumferential direction D3 (see FIG. 2) is defined with reference to a rotation axis A of a motor 14. The axial direction D1 is a direction parallel to the rotation axis A, and its coordinate axis is defined along the rotation axis A. The radial direction D2 is a direction perpendicular to the axial direction D1 and is defined by a coordinate axis with an origin set to the rotation axis A. The circumferential direction D3 of FIG. 2 is a direction perpendicular to the axial direction D1 and the radial direction D2 and is defined by a coordinate axis that orbits around the rotation axis A.

As show in FIG. 1, the drive system 2 includes a motor unit 10 and a gear unit (not shown). The gear unit is provided on one side of the motor unit 10 in the axial direction D1. One side in the axial direction D1 is a right-hand side in FIG. 1. The motor unit 10 includes a motor housing 12 and the motor 14.

The motor 14 is accommodated in the motor housing 12. The motor 14 includes a shaft 20, a rotor 22, and a stator 24. The shaft 20 extends along the rotation axis A. The rotation axis A is the rotation center of the shaft 20. The shaft 20 is rotatably supported by the motor housing 12 via bearings. The rotor 22 is fixed to the shaft 20. The stator 24 is fixed to the motor housing 12 by shrink fitting or the like. The stator 24 includes a stator core 26 and a coil 28. The stator core 26 has a cylindrical shape. The stator core 26 is made up of a plurality of magnetic steel sheets stacked in the axial direction D1. The rotor 22 is disposed on the inner side of the stator core 26 in the radial direction D2. The coil 28 is wound around the stator core 26. The stator core 26 has a first face 26A on one side in the axial direction D1 and a second face 26B on the other side in the axial direction D1. The other side in the axial direction D1 is a left-hand side in FIG. 1. A first coil end 28A of the coil 28 protrudes from the first face 26A toward one side in the axial direction D1. A second coil end 28B of the coil 28 protrudes from the second face 26B toward the other side in the axial direction D1.

The motor housing 12 includes a center housing 40, a first cover 42, and a second cover 44. The center housing 40 has a cylindrical shape. The center housing 40 extends in the axial direction D1. Both ends of the center housing 40 in the axial direction D1 are open. The first cover 42 is connected to one-side end of the center housing 40 in the axial direction D1. The second cover 44 is connected to the other-side end of the center housing 40 in the axial direction D1.

The center housing 40 holds the stator 24 from the outer side in the radial direction D2. An inner periphery of the center housing 40 has a contact region 40A, a first opposing region 40B, and a second opposing region 40C. The contact region 40A is in contact with an outer periphery of the stator 24. The first opposing region 40B is located on one side of the contact region 40A in the axial direction D1 and is opposed to the stator 24 via a gap. The second opposing region 40C is located on the other side of the contact region 40A in the axial direction D1 and is opposed to the stator 24 via a gap.

As shown in FIG. 2, the center housing 40 has a plurality of axial water channels 50 and a plurality of axial oil channels 52. FIG. 2 shows the oil channels by thick lines for the sake of easy understanding. The axial water channels 50 and the axial oil channels 52 extend in the axial direction D1. The axial water channels 50 are arranged at equal intervals in the circumferential direction D3. The axial oil channel 52 are arranged at equal intervals in the circumferential direction D3. In the circumferential direction D3, each of the axial oil channels 52 is disposed between adjacent two of the axial water channels 50. In other words, in the circumferential direction D3, the axial water channels 50 and the axial oil channels 52 are alternately arranged. In the radial direction D2, an inner-side end, center, and outer-side end of each of the axial water channels 50 are respectively disposed on the inner side of an inner-side end, center, and outer-side end of each of the axial oil channels 52. In other words, in the radial direction D2, each of the axial water channels 50 is disposed on the inner side of each of the axial oil channels 52.

The center housing 40 further includes an oil drain channel 54. The oil drain channel 54 includes a center oil drain channel 56, a one-side oil drain channel 58, and an other-side oil drain channel 60. The center oil drain channel 56, the one-side oil drain channel 58, and the other-side oil drain channel 60 are arranged at equal intervals in the circumferential direction D3. The center oil drain channel 56 is located vertically above the shaft 20. The one-side oil drain channel 58 is disposed on one side of the center oil drain channel 56 in the circumferential direction D3. One side in the circumferential direction D3 is a side in a clockwise direction in FIG. 2. The other-side oil drain channel 60 is disposed on the other side of the center oil drain channel 56 in the circumferential direction D3. The other side in the circumferential direction D3 is a side in a counterclockwise direction in FIG. 2.

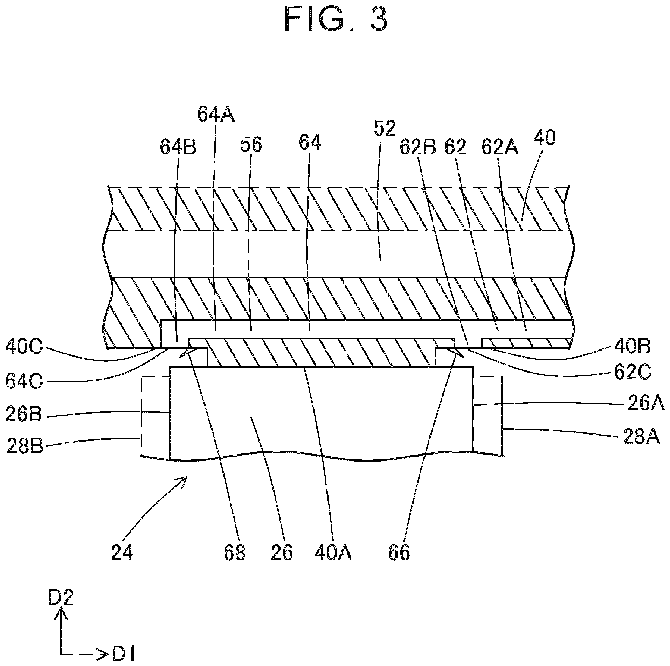

As shown in FIG. 3, the center oil drain channel 56 includes a first oil drain channel 62 and a second oil drain channel 64. The first oil drain channel 62 includes a first inner-side oil channel 62A extending in the axial direction D1, a first radial oil channel 62B extending toward the inner side in the radial direction D2 from the first inner-side oil channel 62A, and a first drain opening 62C. The first drain opening 62C is provided in the first opposing region 40B. The second oil drain channel 64 includes a second inner-side oil channel 64A extending in the axial direction D1, a second radial oil channel 64B extending toward the inner side in the radial direction D2 from the second inner-side oil channel 64A, and a second drain opening 64C. The second drain opening 64C is provided in the second opposing region 40C. The first inner-side oil channel 62A and the second inner-side oil channel 64A communicate with each other.

The center oil drain channel 56, the one-side oil drain channel 58, and the other-side oil drain channel 60 in FIG. 2 have similar configurations. In other words, each of the one-side oil drain channel 58 and the other-side oil drain channel 60 also includes a first oil drain channel 62 and a second oil drain channel 64 (see FIG. 3).

As shown in FIG. 3, the center housing 40 further includes a first guide portion 66 and a second guide portion 68. The first guide portion 66 is provided in the first opposing region 40B. The second guide portion 68 is provided in the second opposing region 40C. The first guide portion 66 is provided on the other side of the first drain opening 62C in the axial direction D1. The first guide portion 66 guides oil-based refrigerant drained from the first drain opening 62C toward the first coil end 28A of the stator 24. The second guide portion 68 is provided on one side of the second drain opening 64C in the axial direction D1. The second guide portion 68 guides oil-based refrigerant drained from the second drain opening 64C toward the second coil end 28B of the stator 24.

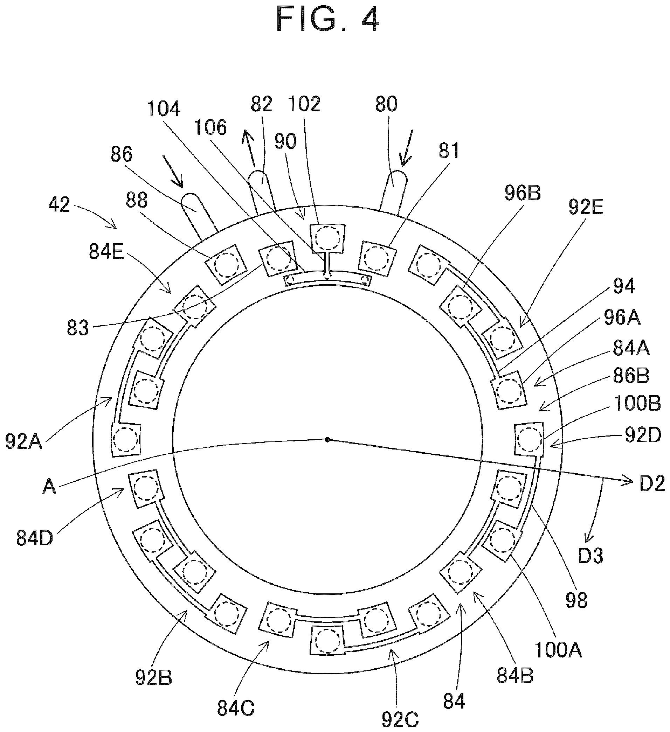

As shown in FIG. 4, the first cover 42 has a water supply channel 80, a supply-side cover water channel 81, a water drain channel 82, a drain-side cover water channel 83, a plurality of first cover water channels 84A, 84B, 84C, 84D, 84E, an oil supply channel 86, a supply-side cover oil channel 88, a drain-side cover oil channel 90, and a plurality of first cover oil channels 92A, 92B, 92C, 92D, 92E. The water supply channel 80 is supplied with water-based refrigerant. The water drain channel 82 drains water-based refrigerant. The oil supply channel 86 is supplied with oil-based refrigerant. Hereinafter, the first cover water channels 84A, 84B, 84C, 84D, 84E may be collectively referred to as "first cover water channels 84", and the first cover oil channels 92A, 92B, 92C, 92D, 92E may be collectively referred to as "first cover oil channels 92". The water supply channel 80 is connected to the supply-side cover water channel 81. The water drain channel 82 is connected to the drain-side cover water channel 83. The water drain channel 82 is located at a position different from the water supply channel 80 in the circumferential direction D3. The supply-side cover water channel 81, the drain-side cover water channel 83, and the first cover water channels 84 are arranged in the circumferential direction D3. The first cover water channels 84 are disposed between the supply-side cover water channel 81 and the drain-side cover water channel 83 in the circumferential direction D3. The first cover water channels 84 are arranged at equal intervals in the circumferential direction D3. Each of the first cover water channels 84 includes a first circumferential water channel 94, a first connection water channel 96A, and a second connection water channel 96B. The first circumferential water channel 94 extends in the circumferential direction D3. The first connection water channel 96A is connected to one-side end of the first circumferential water channel 94 in the circumferential direction D3. The second connection water channel 96B is connected to the other-side end of the first circumferential water channel 94 in the circumferential direction D3. The axial water channels 50 (see FIG. 2) of the center housing 40 are connected to the supply-side cover water channel 81, the drain-side cover water channel 83, the first connection water channels 96A, and the second connection water channels 96B. In other words, each of the first cover water channels 84 connects adjacent two of the axial water channels 50 in the circumferential direction D3.

The oil supply channel 86 is connected to the supply-side cover oil channel 88. The supply-side cover oil channel 88, the drain-side cover oil channel 90, and the first cover oil channels 92 are arranged in the circumferential direction D3. The first cover oil channels 92 are arranged at equal intervals in the circumferential direction D3. Each of the first cover oil channels 92 includes a first circumferential oil channel 98, a first connection oil channel 100A, and a second connection oil channel 100B. The first circumferential oil channel 98 extends in the circumferential direction D3. The first connection oil channel 100A is connected to one-side end of the first circumferential oil channel 98 in the circumferential direction D3. The second connection oil channel 100B is connected to the other-side end of the first circumferential oil channel 98 in the circumferential direction D3. The axial oil channels 52 (see FIG. 2) of the center housing 40 are connected to the supply-side cover oil channel 88, a third connection oil channel 102 of the drain-side cover oil channel 90, the first connection oil channels 100A, and the second connection oil channels 100B. In other words, each of the first cover oil channels 92 connects adjacent two of the axial oil channels 52 in the circumferential direction D3. The second connection oil channel 100B is disposed between the adjacent first connection water channel 96A and second connection water channel 96B in the circumferential direction D3. The first connection oil channel 100A is dispose on the outer side of the first circumferential water channel 94 of each of the first cover water channels 84 in the radial direction D2.

The drain-side cover oil channel 90 includes the third connection oil channel 102, an inner circumferential oil channel 104, and a third radial oil channel 106. The third radial oil channel 106 connects the third connection oil channel 102 with the inner circumferential oil channel 104. The third connection oil channel 102 is disposed between the supply-side cover water channel 81 and the drain-side cover water channel 83 in the circumferential direction D3. The axial oil channel 52 (see FIG. 2) of the center housing 40 is connected to the third connection oil channel 102. The inner circumferential oil channel 104 is disposed on the inner side of the first connection water channels 96A and the second connection water channels 96B in the radial direction D2. The center oil drain channel 56, the one-side oil drain channel 58, and the other-side oil drain channel 60 (see FIG. 2) of the center housing 40 are connected to the inner circumferential oil channel 104.

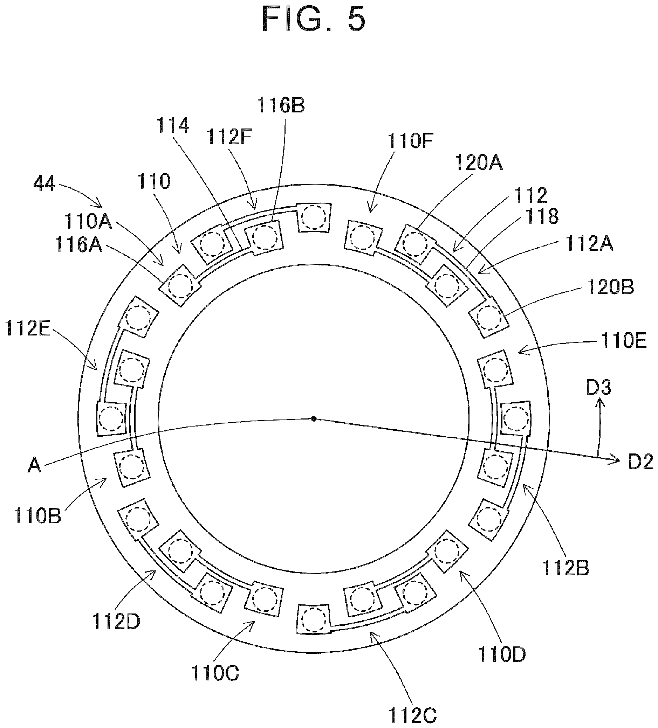

As shown in FIG. 5, the second cover 44 has a plurality of second cover water channels 110A, 110B, 110C, 110E, 110F and a plurality of second cover oil channels 112A, 112B, 112C, 112D, 112E, 112F. Hereinafter, the second cover water channels 110A, 110B, 110C, 110D, 110E, 110F may be collectively referred to as "second cover water channels 110", and the second cover oil channels 112A, 112B 112C, 112D, 112E, 112F may be collectively referred to as "second cover oil channels 112". The second cover water channels 110 are arranged at equal intervals in the circumferential direction D3. Each of the second cover water channels 110 includes a second circumferential water channel 114, a third connection water channel 116A, and a fourth connection water channel 116B. The second circumferential water channel 114 extends in the circumferential direction D3. The third connection water channel 116A is connected to one-side end of the second circumferential water channel 114 in the circumferential direction D3. The fourth connection water channel 116B is connected to the other-side end of the second circumferential water channel 114 in the circumferential direction D3. The axial water channels 50 (see FIG. 2) of the center housing 40 are connected to the third connection water channels 116A and the fourth connection water channels 116B. In other words, each of the second cover water channels 110 connects adjacent two of the axial water channels 50 in the circumferential direction D3.

Each of the second cover oil channels 112 includes a second circumferential oil channel 118, a third connection oil channel 120A, and a fourth connection oil channel 120B. The second circumferential oil channel 118 extends in the circumferential direction D3. The third connection oil channel 120A is connected to one-side end of the second circumferential oil channel 118 in the circumferential direction D3. The fourth connection oil channel 120B is connected to the other-side end of the second circumferential oil channel 118 in the circumferential direction D3. The axial oil channels 52 (see FIG. 2) of the center housing 40 are connected to the third connection oil channels 120A and the fourth connection oil channels 120B. In other words, each of the second cover oil channels 112 connects adjacent two of the axial oil channels 52 in the circumferential direction D3. The fourth connection oil channel 120B of each of the second cover oil channels 112 is disposed between the adjacent third connection water channel 116A and fourth connection water channel 116B in the circumferential direction D3. The third connection oil channel 120A of the second cover oil channel 112 is disposed on the outer side of the second circumferential water channel 114 of each of the second cover water channels 110 in the radial direction D2. Water Channels in Motor Housing 12

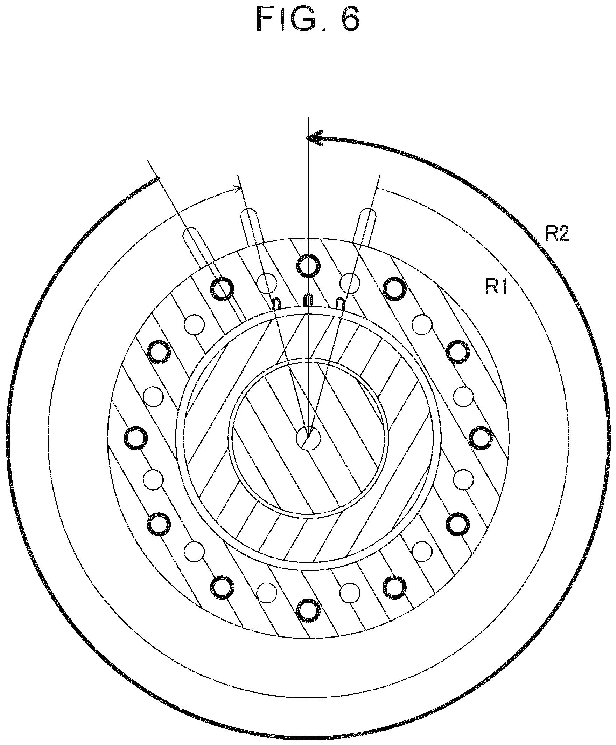

Water channels in the motor housing 12 include the axial water channels 50 of the center housing 40, the supply-side cover water channel 81, first cover water channels 84, and drain-side cover water channel 83 of the first cover 42, and the second cover water channels 110 of the second cover 44. As shown in FIG. 6, the water channels are provided in a first range R1 from the water supply channel 80 toward one side in the circumferential direction D3 to the water drain channel 82. In other words, water-based refrigerant flows from the water supply channel 80 toward one side in the circumferential direction D3 to the water drain channel 82.

Oil channels in the motor housing 12 include the axial oil channels 52 of the center housing 40, the supply-side cover oil channel 88, first cover oil channels 92, and drain-side cover oil channel 90 of the first cover 42, and the second cover oil channels 112 of the second cover 44. The oil channels are provided in a second range R2 from the oil supply channel 86 toward the other side in the circumferential direction D3 to the oil drain channel 54. In other words, oil-based refrigerant flows from the oil supply channel 86 toward the other side in the circumferential direction D3 to the oil drain channel 54. Therefore, in the circumferential direction D3, the direction in which oil-based refrigerant flows is opposite to the direction in which water-based refrigerant flows. At least part of the first range R1 coincides with at least part of the second range R2 in position in the circumferential direction D3. Specifically, in a range from the water supply channel 80 toward one side in the circumferential direction D3 to the oil supply channel 86, the first range R1 coincides with the second range R2 in position in the circumferential direction D3. In other words, almost all around the circle, the first range R1 coincides with the second range R2 in position in the circumferential direction D3.

### Cooling Effect

The effect in a case where the temperature of water-based refrigerant supplied to the motor housing 12 is lower than the temperature of oil-based refrigerant supplied to the motor housing 12 and the temperature of the motor 14 will be described.

With the above configuration, water-based refrigerant after an inverter (not shown) is cooled is supplied to the motor housing 12. Then, when water-based refrigerant flows through the water channels in the motor housing 12, the stator 24 in the motor housing 12 is cooled from the outer side in the radial direction D2.

Oil-based refrigerant is supplied to the motor housing 12 via an oil pump (not shown). As shown in FIG. 2, in the center housing 40, each of the axial water channels 50 is opposed to adjacent one of the axial oil channels 52. For this reason, heat is exchanged between water-based refrigerant flowing through the axial water channels 50 and oil-based refrigerant flowing through the axial oil channels 52. Through this heat exchange, heat of oil-based refrigerant is dissipated, and oil-based refrigerant is cooled. As shown in FIG. 4, in the first cover 42, part of each of the first cover water channels 84 is opposed to part of a corresponding one of the first cover oil channels 92. For this reason, in the first cover 42 as well, heat is exchanged between water-based refrigerant and oil-based refrigerant. Furthermore, as shown in FIG. 5, in the second cover 44, each of the second cover water channels 110 is opposed to a corresponding one of the second cover oil channels 112. For this reason, in the second cover 44 as well, heat is exchanged between water-based refrigerant and oil-based refrigerant. In this way, oil-based refrigerant is cooled in the course of flowing in the motor housing 12. With this configuration, an oil cooler for cooling oil-based refrigerant does not need to be used. In this case, the number of components is reduced.

As shown in FIG. 2, cooled oil-based refrigerant is supplied to the center oil drain channel 56, the one-side oil drain channel 58, and the other-side oil drain channel 60 via the drain-side cover oil channel 90. As shown in FIG. 3, part of oil-based refrigerant supplied to the center oil drain channel 56 is drained to the internal space of the motor housing 12 via the first oil drain channel 62. Then, the oil-based refrigerant is guided to the first coil end 28A by the first guide portion 66. Thus, the first coil end 28A is cooled. Part of oil-based refrigerant supplied to the center oil drain channel 56 is drained to the internal space of the motor housing 12 via the second oil drain channel 64. Then, the oil-based refrigerant is guided to the second coil end 28B by the second guide portion 68. Thus, the second coil end 28B is cooled. In this way, a lead wire side and anti-lead wire side of the stator 24 are cooled by oil-based refrigerant.

In the present embodiment, as shown in FIG. 4, the oil drain channel 54 is adjacent to the water supply channel 80. Therefore, the axial oil channel 52 connected to the oil drain channel 54 is adjacent to the axial water channel 50 connected to the water supply channel 80. Hereinafter, the axial oil channel 52 connected to the oil drain channel 54, the axial water channel 50 connected to the water supply channel 80, and the axial water channel 50 connected to the water drain channel 82 are respectively referred to as "first axial oil channel", "first axial water channel", and "second axial water channel". Specifically, the first axial oil channel is disposed between the first axial water channel and the second axial water channel. Of the axial water channels 50, the temperature of water-based refrigerant flowing through the first axial oil channel is lowest. For this reason, when heat is exchanged between oil-based refrigerant flowing through the first axial oil channel and water-based refrigerant flowing through the first axial water channel, the temperature of oil-based refrigerant drained to the internal space of the motor housing 12 can be further decreased.

### Warming Effect

A case where the temperature of water-based refrigerant supplied to the motor housing 12 is higher than the temperature of oil-based refrigerant supplied to the motor housing 12 will be described.

When the temperature of oil-based refrigerant is relatively low, the viscosity of oil-based refrigerant is high. In this case, a pressure loss in oil channels and a drag loss of the motor 14 increase. With the above configuration, heat is exchanged between water-based refrigerant flowing through the water channels and oil-based refrigerant flowing through the oil channels in the motor housing 12. Through this heat exchange, oil-based refrigerant is warmed. As a result, the temperature of oil-based refrigerant increases, and the viscosity of oil-based refrigerant decreases. For this reason, a pressure loss in oil channels and a drag loss of the motor 14 can be reduced.

### Advantageous Effects of Present Embodiment

As described above, the motor housing 12 having a cylindrical shape and extending along a central axis includes the water supply channel 80, the water drain channel 82, the water channels, the oil supply channel 86, the oil drain channel 54, and the oil channels. The water supply channel 80 is supplied with water-based refrigerant. The water drain channel 82 is provided at a position different from the water supply channel 80 in the circumferential direction D3 with reference to the central axis and drains water-based refrigerant. The water channels are provided in the first range R1 from the water supply channel 80 toward one side in the circumferential direction D3 to the water drain channel 82. The oil supply channel 86 is supplied with oil-based refrigerant. The oil drain channel 54 is provided at a position different from the oil supply channel 86 in the circumferential direction D3 and drains oil-based refrigerant to the internal space of the motor housing 12. The oil channels are provided in the second range R2 from the oil supply channel 86 toward the other side in the circumferential direction D3 to the oil drain channel 54. At least part of the first range R1 coincides with at least part of the second range R2 in position in the circumferential direction D3.

With the above configuration, at least part of the first range R1 coincides with at least part of the second range R2 in position in the circumferential direction D3. For this reason, heat is exchanged between water-based refrigerant flowing through the water channels and oil-based refrigerant flowing through the oil channels. Through this heat exchange, a temperature difference between the water-based refrigerant and the oil-based refrigerant is moderated, and uneven cooling or warming of the motor 14 is suppressed. Furthermore, since oil-based refrigerant is supplied to the internal space of the motor housing 12, the motor 14 is directly cooled or warmed by the oil-based refrigerant. Therefore, it is possible to effectively cool or warm the motor 14 by a combination of water-based refrigerant and oil-based refrigerant.

The water channels include the axial water channels 50 extending in the axial direction D1, and the oil channels include the axial oil channels 52 extending in the axial direction D1. At least part of each of the axial water channels 50 coincides with at least part of each of the axial oil channels 52 in position in the radial direction D2 with reference to the central axis.

With the above configuration, a distance between each of the axial water channels 50 and an adjacent one of the axial oil channels 52 can be reduced. Therefore, it is possible to effectively exchange heat between the axial water channels 50 and the axial oil channels 52.

The water channels include the axial water channels 50 extending in the axial direction D1, and the oil channels include the axial oil channels 52 extending in the axial direction D1. The axial water channels 50 and the axial oil channels 52 may be alternately arranged at least one by one in the circumferential direction D3.

With the above configuration, at least one axial oil channel 52 is disposed adjacent to each of many axial water channels 50, so it is possible to effectively exchange heat between the axial water channels 50 and the axial oil channels 52.

The water channels include the axial water channels 50 extending in the axial direction D1, and the oil channels include the axial oil channels 52 extending in the axial direction D1. An inner-side end of each of the axial water channels 50 is disposed on the inner side in the radial direction D2 with respect to an inner-side end of each of the axial oil channels 52.

With the above configuration, it is possible to effectively cool the motor 14 accommodated in the internal space with water-based refrigerant flowing through the axial water channels 50. Such a configuration is particularly effective in a structure in which the temperature of water-based refrigerant is more accurately managed than the temperature of oil-based refrigerant.

The oil drain channel 54 may be disposed adjacent to the water supply channel 80.

If the temperature of the motor 14 is higher than the temperature of water-based refrigerant, the temperature of water-based refrigerant flowing through the water channels increases as the water-based refrigerant flows from an upstream side toward a downstream side. In other words, the temperature of water-based refrigerant flowing through the water supply channel 80 is lowest. With the above configuration, it is possible to cool oil-based refrigerant flowing through the oil drain channel 54 by heat exchange with water-based refrigerant flowing through the water supply channel 80.

The water channels include the axial water channels 50 extending in the axial direction D1, and the oil channels include the axial oil channels 52 extending in the axial direction D1. The axial water channels 50 include the first axial water channel connected to the water supply channel 80. The axial oil channels 52 include the first axial oil channel connected to the oil drain channel 54. The first axial oil channel is adjacent to the first axial water channel.

As described above, when the temperature of the motor 14 is higher than the temperature of water-based refrigerant, the temperature of water-based refrigerant flowing through the first axial water channel is lowest of water-based refrigerant flowing through the axial water channels 50. With the above configuration, it is possible to cool oil-based refrigerant flowing through the first axial oil channel by heat exchange with water-based refrigerant flowing through the first axial water channel.

The axial water channels 50 further include the second axial water channel connected to the water drain channel 82. The first axial oil channel is located in the range from the first axial water channel toward the other side in the circumferential direction D3 to the second axial water channel.

With the above configuration, it is possible to freely design the oil drain channel 54 extending from the first axial oil channel to the inside of the motor housing 12. In other words, there is no water channel in the range from the first axial water channel toward the other side in the circumferential direction D3 to the second axial water channel. Therefore, when the first axial oil channel is located in that range, it is possible to freely design the oil drain channel 54 without interference with the water channels.

The motor housing 12 holds the stator 24. The inner periphery of the motor housing 12 has the contact region 40A and the first opposing region 40B (an example of the "opposing region"). The contact region 40A is in contact with the outer periphery of the stator 24. The first opposing region 40B is located on one side of the contact region 40A in the axial direction D1 and is opposed to the stator 24 via a gap. The oil drain channel 54 has the first drain opening 62C (an example of the "at least one opening") in the first opposing region 40B of the inner periphery of the motor housing 12.

With the above configuration, it is possible to directly cool or warm the stator 24 with oil-based refrigerant drained from the first drain opening 62C. In addition, oil-based refrigerant supplied to the stator 24 can also function as a lubricant for the gear unit and bearings.

The at least one opening of the oil drain channel 54 includes the first drain opening 62C of the center oil drain channel 56 located vertically above the central axis.

With the above configuration, it is possible to reliably bring oil-based refrigerant drained from the first drain opening 62C into contact with the stator 24. Therefore, it is possible to further efficiently cool or warm the stator 24.

The at least one opening of the oil drain channel 54 includes a plurality of openings arranged in the circumferential direction D3. The first drain openings 62C of the center oil drain channel 56, one-side oil drain channel 58, and other-side oil drain channel 60 are an example of the "plurality of openings".

With the above configuration, it is possible to increase locations where oil-based refrigerant contacts in the stator 24. Therefore, it is possible to further efficiently cool or warm the stator 24.

The motor housing 12 further includes the first guide portion 66 (an example of the "guide portion") that guides oil-based refrigerant drained from the first drain opening 62C of the oil drain channel 54 toward the first coil end 28A (an example of the "coil end") of the stator 24.

The first coil end 28A of the stator 24 tends to generate heat. With the above configuration, oil-based refrigerant drained from the first drain opening 62C is guided toward the first coil end 28A. Therefore, it is possible to directly cool or warm the first coil end 28A.

The motor housing 12 further includes the second oil drain channel 64 that drains oil-based refrigerant from the oil channel to the internal space of the motor housing 12. The inner periphery of the motor housing 12 has a second opposing region 40C located on the other side of the contact region 40A in the axial direction D1 and opposed to the stator 24 via a gap. The second oil drain channel 64 has the second drain opening 64C (an example of the "at least one second opening") in the second opposing region 40C of the inner periphery of the motor housing 12.

With the above configuration, it is possible to directly cool the stator 24 with oil-based refrigerant drained from the second drain opening 64C of the oil drain channel 54 on the other side in the axial direction D1. Therefore, it is possible to further efficiently cool the stator 24.

The motor housing 12 further includes the center housing 40, the first cover 42, and the second cover 44. The center housing 40 extends in the axial direction D1. The first cover 42 is connected to one end of the center housing 40 in the axial direction D1. The second cover 44 is connected to the other end of the center housing 40 in the axial direction D1.

With the above configuration, it is possible to easily form water channels and oil channels. In other words, when parts of water channels and oil channels are formed in the center housing 40, the first cover 42, and the second cover 44 in advance, and the center housing 40, the first cover 42, and the second cover 44 are combined with one another, it is possible to implement water channels and oil channels with a relatively complicated configuration.

### Second Embodiment

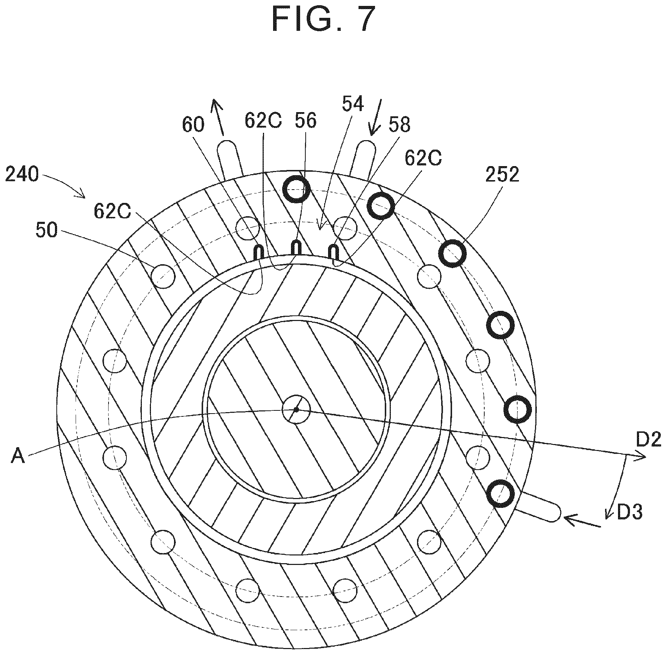

A drive system 2 according to a second embodiment will be described with reference to FIG. 7 to FIG. 10. The motor housing 12 of the drive system 2 according to the second embodiment differs from the motor housing 12 according to the first embodiment. Like reference signs denote components common to the embodiments, and the description thereof is omitted.

As shown in FIG. 7, a center housing 240 of the motor housing 12 according to the second embodiment includes a plurality of axial water channels 50 and a plurality of axial oil channel 252. The axial oil channels 252 extend in the axial direction D1. In the circumferential direction D3, a distance between adjacent two of the axial oil channels 252 is shorter than a distance between adjacent two of the axial water channels 50. An inner-side end of each of the axial oil channels 252 is disposed on the outer side in the radial direction D2 with respect to an outer-side end of each of the axial water channels 50. In other words, each of the axial oil channels 252 is entirely disposed on the outer side of each of the axial water channels 50 in the radial direction D2. The number of the axial oil channels 252 is smaller than the number of the axial water channels 50.

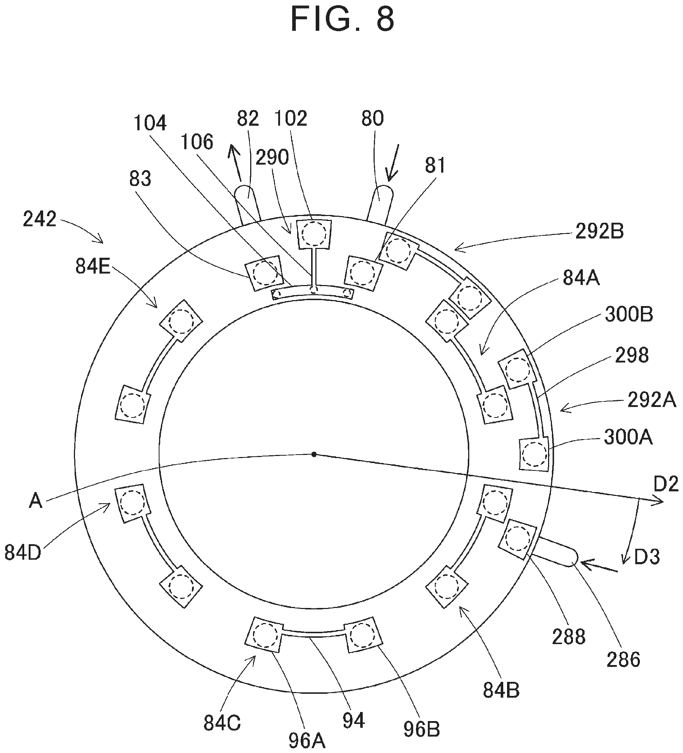

As shown in FIG. 8, a first cover 242 of the motor housing 12 according to the second embodiment includes an oil supply channel 286, a supply-side cover oil channel 288, a drain-side cover oil channel 290, and a plurality of first cover oil channels 292A, 292B. The oil supply channel 286 is supplied with oil-based refrigerant. Hereinafter, the first cover oil channels 292A, 292B may be collectively referred to as "first cover oil channels 292". The oil supply channel 286 is provided at substantially the same position as the first connection water channel 96A of the first cover water channel 84B in the circumferential direction D3. Each of the first cover oil channels 292 includes a first circumferential oil channel 298, a first connection oil channel 300A, and a second connection oil channel 300B. The first circumferential oil channel 298 extends in the circumferential direction D3. The first connection oil channel 300A is connected to one-side end of the first circumferential oil channel 298 in the circumferential direction D3. The second connection oil channel 300B is connected to the other-side end of the first circumferential oil channel 298 in the circumferential direction D3. The axial oil channels 252 (see FIG. 7) of the center housing 40 are connected to the first connection oil channels 300A and the second connection oil channels 300B. In other words, each of the first cover oil channels 292A, 292B connects adj acent two of the axial oil channels 252 in the circumferential direction D3. The first cover oil channels 292 are disposed on the outer side of the first cover water channels 84 in the radial direction D2.

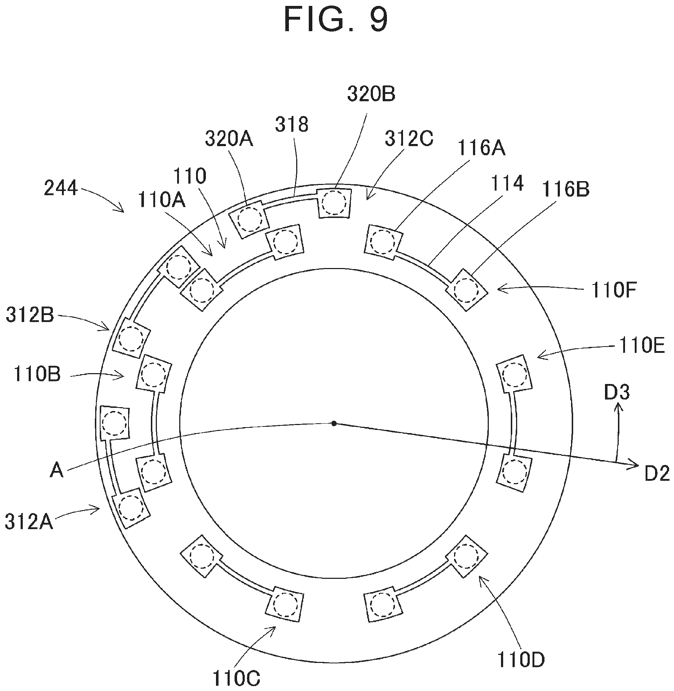

As shown in FIG. 9, a second cover 244 of the motor housing 12 according to the second embodiment includes a plurality of second cover oil channels 312A, 312B, 312C. Hereinafter, the second cover oil channels 312A, 312B, 312C may be collectively referred to as "second cover oil channels 312". Each of the second cover oil channels 312 includes a second circumferential oil channel 318, a third connection oil channel 320A, and a fourth connection oil channel 320B. The second circumferential oil channel 318 extends in the circumferential direction D3. The third connection oil channel 320A is connected to one-side end of the second circumferential oil channel 318 in the circumferential direction D3. The fourth connection oil channel 320B is connected to the other-side end of the second circumferential oil channel 318 in the circumferential direction D3. The axial oil channels 252 (see FIG. 7) of the center housing 40 are connected to the third connection oil channels 320A and the fourth connection oil channels 320B. In other words, each of the second cover oil channels 312 connects adjacent two of the axial oil channels 252 in the circumferential direction D3. The second cover oil channels 312 are disposed on the outer side of the second cover water channels 110 in the radial direction D2.

### Water Channels in Motor Housing 12

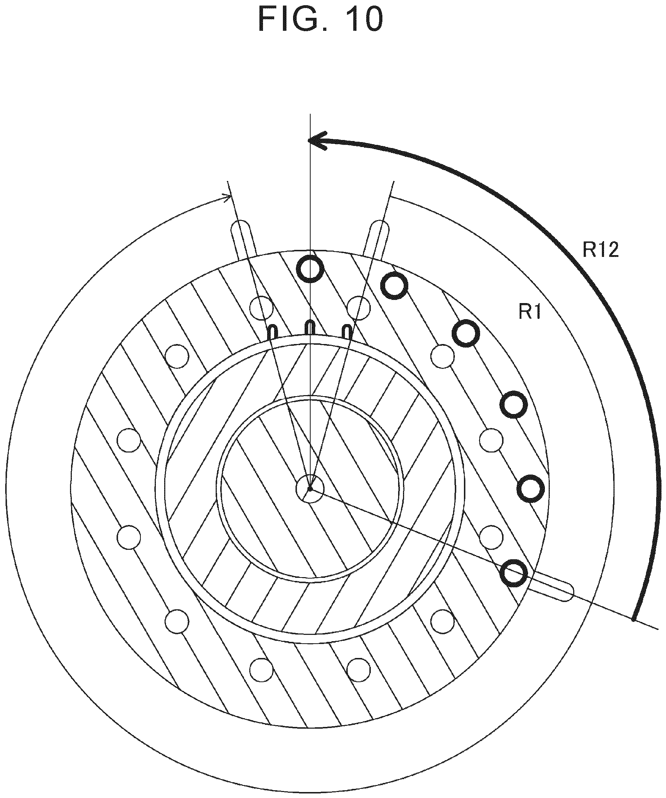

As in the case of the first embodiment, water channels in the motor housing 12 include the axial water channels 50 of the center housing 240, the supply-side cover water channel 81, first cover water channels 84, and drain-side cover water channel 83 of the first cover 242, and the second cover water channels 110 of the second cover 244. Oil channels in the motor housing 12 include the axial oil channels 252 of the center housing 240, the supply-side cover oil channel 288, drain-side cover oil channel 290, and first cover oil channels 292 of the first cover 242, and the second cover oil channels 312 of the second cover 244. As shown in FIG. 10, oil channels are provided in a second range R12 from the oil supply channel 286 toward the other side in the circumferential direction D3 to the oil drain channel 54. In the present embodiment as well, in the circumferential direction D3, the direction in which oil-based refrigerant flows is opposite to the direction in which water-based refrigerant flows.

At least part of the first range R1 coincides with at least part of the second range R12 in position in the circumferential direction D3. Specifically, in a range from the water supply channel 80 toward one side in the circumferential direction D3 to the oil supply channel 286, the first range R1 coincides with the second range R12 in position in the circumferential direction D3. The second range R12 according to the present embodiment is smaller than the second range R2 (see FIG. 7) according to the first embodiment. The range in which the second range R12 overlaps the first range R1 in the circumferential direction D3 is also smaller than the range in which the second range R2 overlaps the first range R1 according to the first embodiment. In the present embodiment, the second range R12 overlaps the first range R1 in about a quarter of the entire circumference. With this configuration as well, it is possible to cool oil-based refrigerant in the motor housing 12. It is also possible to reduce a pressure loss in oil channels by relatively reducing a range in which the second range R12 overlaps the first range R1 in the circumferential direction D3. Therefore, it is possible to suppress an increase in the size of an oil pump.

Specific examples of the technology disclosed in the specification have been described in detail; however, these are only illustrative and are not intended to limit the scope of the appended claims. The technology described in the appended claims also encompasses various modifications and changes from the specific examples illustrated above.

### First Modification

An inner-side end of each of the axial oil channels of the motor housing may be located on an inner side in the radial direction D2 with respect to an inner-side end of each of the axial water channels.

### Second Modification

Two or more axial oil channels may be disposed between adjacent two of the axial water channels in the circumferential direction D3. A plurality of the axial water channels and a plurality of the axial oil channels may coincide with each other in the circumferential direction D3.

### Third Modification

The oil drain channel 54 does not need to be disposed adjacent to the water supply channel 80. For example, the oil drain channel 54 may be disposed at a position away from the water supply channel 80 by 45° or larger in the circumferential direction D3. Fourth Modification

The oil drain channel 54 may have a drain opening in a region not opposing the stator 24 in the radial direction D2.

### Fifth Modification

The oil drain channel 54 does not need to include the center oil drain channel 56.

### Sixth Modification

The oil drain channel 54 does not need to include the one-side oil drain channel 58 or the other-side oil drain channel 60.

### Seventh Modification

The center oil drain channel 56 does not need to include the second oil drain channel 64.

### Eighth Modification

The motor housing 12 does not need to include at least one of the first guide portion 66 and the second guide portion 68.

### Ninth Modification

The motor housing 12 may be made up of two members. In other words, the motor housing having a cylindrical shape also includes a closed-end cylindrical housing.

The technical elements described in the specification or the drawings exhibit technical usability solely or various combinations and are not limited to combinations of the appended claims at the time of filing the application. The technology illustrated in the specification and drawings can achieve multiple purposes at the same time and has technical usability by achieving one of those purposes.

## Claims

1. A motor housing (12) having a cylindrical shape and extending along a central axis, the motor housing (12) comprising:
a water supply channel (80) configured to be supplied with water-based refrigerant;
a water drain channel (82) provided at a position different from the water supply channel (80) in a circumferential direction with reference to the central axis and configured to drain the water-based refrigerant;
a first-range water channel (50; 81; 83; 84; 110) provided in a first range (R1) from the water supply channel (80) toward one side in the circumferential direction to the water drain channel (82);
an oil supply channel (86; 286) configured to be supplied with oil-based refrigerant;
a first oil drain channel (54) provided at a position different from the oil supply channel (86; 286) in the circumferential direction and configured to drain the oil-based refrigerant to an internal space of the motor housing (12); and
a second-range oil channel (52; 88; 90; 92; 112) provided in a second range (R2; R12) from the oil supply channel (86; 286) toward the other side in the circumferential direction to the first oil drain channel (54), wherein
at least part of the first range (R1) coincides with at least part of the second range (R2; R12) in a position in the circumferential direction.

2. The motor housing (12) according to claim 1, wherein:
the first-range water channel (50; 81; 83; 84; 110) includes a plurality of axial water channels (50) extending in an axial direction parallel to the central axis;
the second-range oil channel (52; 88; 90; 92; 112) includes a plurality of axial oil channels (52) extending in the axial direction; and
at least part of the axial water channel (50) coincides with at least part of the axial oil channel (52) in a position in a radial direction with reference to the central axis.

3. The motor housing (12) according to claim 1, wherein:
the first-range water channel (50; 81; 83; 84; 110) includes a plurality of axial water channels (50) extending in an axial direction parallel to the central axis;
the second-range oil channel (52; 88; 90; 92; 112) includes a plurality of axial oil channels (52; 252) extending in the axial direction; and
the plurality of axial water channels (50) and the plurality of axial oil channels (52; 252) are alternately arranged at least one by one in the circumferential direction.

4. The motor housing (12) according to claim 1, wherein:
the first-range water channel (50; 81; 83; 84; 110) includes a plurality of axial water channels (50) extending in an axial direction parallel to the central axis;
the second-range oil channel (52; 88; 90; 92; 112) includes a plurality of axial oil channels (252) extending in the axial direction; and
an inner-side end of the axial water channel (50) is disposed inward of an inner-side end of the axial oil channel (252) in a radial direction.

5. The motor housing (12) according to claim 1, wherein the first oil drain channel (54) is disposed adjacent to the water supply channel (80).

6. The motor housing (12) according to claim 5, wherein:
the first-range water channel (50; 81; 83; 84; 110) includes a plurality of axial water channels (50) extending in an axial direction parallel to the central axis;
the second-range oil channel (52; 88; 90; 92; 112) includes a plurality of axial oil channels (52; 252) extending in the axial direction;
the plurality of axial water channels (50) includes a first axial water channel connected to the water supply channel (80);
the plurality of axial oil channels (52; 252) includes a first axial oil channel connected to the first oil drain channel (54); and
the first axial oil channel is adjacent to the first axial water channel.

7. The motor housing (12) according to claim 6, wherein:
the plurality of axial water channels (50) further includes a second axial water channel connected to the water drain channel (82); and
the first axial oil channel is located in a range from the first axial water channel toward the other side in the circumferential direction to the second axial water channel.

8. The motor housing (12) according to claim 1, wherein:
the motor housing (12) holds a stator (24);
an inner periphery of the motor housing (12) has
a contact region (40A) being in contact with an outer periphery of the stator (24), and
an opposing region (40B) located on one side of the contact region (40A) in an axial direction parallel to the central axis and opposed to the stator (24) via a gap; and
the first oil drain channel (54) has at least one opening (62C) in the opposing region (40B) of the inner periphery of the motor housing (12).

9. The motor housing (12) according to claim 8, wherein the at least one opening (62C) of the first oil drain channel (54) includes an opening located vertically above the central axis.

10. The motor housing (12) according to claim 8, wherein the at least one opening (62C) of the first oil drain channel (54) includes a plurality of openings arranged in the circumferential direction.

11. The motor housing (12) according to claim 8, further comprising a guide portion (66) configured to guide the oil-based refrigerant drained from the at least one opening (62C) of the first oil drain channel (54) toward a coil end (28A) of the stator (24).

12. The motor housing (12) according to claim 8, further comprising a second oil drain channel (64) configured to drain the oil-based refrigerant from the second-range oil channel (52; 88; 90; 92; 112) to the internal space of the motor housing (12), wherein:
the inner periphery of the motor housing (12) has a second opposing region (40C) located on the other side of the contact region (40A) in the axial direction and opposed to the stator (24) via a gap; and
the second oil drain channel (64) has at least one second opening (64C) in the second opposing region (40C) of the inner periphery of the motor housing (12).

13. The motor housing (12) according to claim 1, further comprising:
a center housing (40; 240) extending in an axial direction parallel to the central axis;
a first cover (42; 242) connected to one end of the center housing (40; 240) in the axial direction; and
a second cover (44; 244) connected to the other end of the center housing (40; 240) in the axial direction.
